# FASCICULE DE BREVET EUROPEEN

(11) **EP 1 634 220 B1**
(45) Date de publication et mention de la délivrance du brevet: **06.10.2010**
(21) Numéro de dépôt: 04741709.2
(22) Date de dépôt: 02.06.2004
(51) Int. Cl.: G06K 9/00

(54) **PROCEDE ET DISPOSITIF D'IDENTIFICATION BIOMETRIQUE ADAPTES A LA VERIFICATION SUR CARTE A PUCE**
VERFAHREN UND VORRICHTUNG ZUR BIOMETRISCHEN ERKENNUNG FÜR VERIFIZIERUNGSZWECKE AUF CHIPKARTEN
BIOMETRIC IDENTIFICATION METHOD AND DEVICE USED FOR VERIFICATION PURPOSES ON CHIP CARDS

(30) Priorité: 05.06.2003 FR 0306789
(43) Date de publication de la demande: 15.03.2006
(73) Titulaire: Gemalto SA, 92190 Meudon (FR)
(72) Inventeur: NACCACHE, David, F-75018 Paris (FR); BARRAL, Claude, F-13119 St Savournin (FR); CORON, Jean-Sebastien, L-2551 Luxembourg (LU); CARDONNEL, Cédric, F-13470 Carnoux en Provence (FR)
(86) Numéro de dépôt international: PCT/EP2004/050996
(87) Numéro de publication internationale: WO 2004/109585

(56) Documents cités:
- EP-A- 0 493 243
- BOLLE R M ET AL: "Biometric perils and patches" PATTERN RECOGNITION, PERGAMON PRESS INC. ELMSFORD, N.Y, US, vol. 35, no. 12, décembre 2002 (2002-12), pages 2727-2738, XP004379643 ISSN: 0031-3203
- SOUTAR C ET AL: "Biometric Encryption using image processing" PROCEEDINGS OF THE SPIE, SPIE, BELLINGHAM, VA, US, no. 3314, 28 janvier 1998 (1998-01-28), pages 178-188, XP002079403 ISSN: 0277-786X

## Description

L'invention concerne l'identification biométrique d'un utilisateur d'un système. Elle est adaptée à une vérification d'identité sur un objet portable de type carte à puce.

Une méthode couramment utilisée pour l'identification d'un utilisateur repose sur un code d'identification secret également appelé PIN (pour Personal Identification Number en anglais). Dans un système utilisant des cartes à puce, un utilisateur saisit son PIN code sur un terminal de transaction, qui transfère alors le PIN code saisi vers la carte à puce qui effectue la vérification du PIN code par comparaison avec un PIN code de référence. La sécurité d'un tel système est garantie par le fait que le PIN code de référence est mémorisé au sein de la carte à puce, par nature sécurisée, et n'en sort jamais au cours du procédé de vérification d'identité, puisque la vérification finale est effectuée par la carte. Un tel système a pour inconvénients le fait que le propriétaire de la carte doit mémoriser un secret et le fait qu'un autre utilisateur peut frauder en volant ce secret.

La biométrie consiste à acquérir, mesurer et reconnaître des caractéristiques physiques d'un utilisateur. Elle permet d'identifier directement un utilisateur alors que la méthode par PIN code permet une identification indirecte par le fait de vérifier que l'utilisateur connaît un secret. Parmi les techniques connues en biométrie, on dénote les méthodes de reconnaissance des caractéristiques vocales, des caractéristiques propres à la forme du visage ou à l'iris de l'oeil ou, dans le cas le plus fréquent, des caractéristiques d'empreintes digitales.

Tous les procédés et systèmes de vérification d'identité biométrique existant se décomposent en trois phasmes :
- la première phase est une phase de capture de données biométriques à partir d'un capteur. Ces données biométriques obtenues sont le plus souvent des images, par exemple dans les cas d'empreintes digitales, d'iris ou de forme du visage. Mais il peut également s'agir de séquences sonores dans le cas de reconnaissances vocales.
- La deuxième phase est une phase d'analyse ou d'extraction permettant d'extraire une signature biométrique à partir des données biométriques capturées lors de la première phase, cette signature se composant d'un ensemble plus restreint de données biométriques particulières. Cette seconde phase est extrêmement complexe et nécessite une grande puissance de calcul.
- La troisième phase consiste à comparer la signature biométrique obtenue lors de la seconde phase avec une signature de référence définie auparavant lors d'une procédure appelée enrôlement.

Les objets électroniques portatifs de type cartes à puce sont munis de microprocesseurs dont la puissance de calcul reste encore limitée. C'est pourquoi un système biométrique de l'art antérieur utilisant des cartes à puce fonctionne de la manière suivante :
- dans la phase d'enrôlement, une signature biométrique de référence de l'utilisateur de la carte est stockée dans une mémoire sécurisée de la carte à puce.
- dans la phase de vérification d'identité, un terminal capture les données biométriques de l'utilisateur puis extrait une signature biométrique. Deux solutions existent alors :
   - soit la signature biométrique de référence est transférée de la carte au terminal pour une vérification de l'identité, par comparaison des deux signatures, sur le terminal : cette méthode présente l'inconvénient que la signature de référence risque d'être interceptée, ce qui est une faille de sécurité. Une identification classique par PIN code n'a pas cet inconvénient ;
   - soit la signature biométrique extraite est transférée vers la carte pour une vérification sur la carte. La carte ne possédant qu'une faible capacité de calcul, la vérification est une opération lourde, qui nécessite un long temps de traitement. Cela représente un inconvénient par rapport à l'utilisation classique de PIN code.

Un objet de la présente invention est de proposer une solution d'identification biométrique à la fois sûre et simple, adaptée à une vérification d'identité sur un objet de type carte à puce.

La solution repose sur un procédé d'enrôlement comprenant la capture de données biométriques, l'extraction d'une vraie signature biométrique composée de vraies données biométriques particulières, **caractérisé en ce qu**'il comprend les étapes suivante :
- élaboration de fausses données biométriques particulières ;
- génération de la signature biométrique obscurcie en combinant les fausses données biométriques particulières avec les vraies données biométriques particulières,
- élaboration d'un code d'authentification qui indique quelles sont les fausses et les vraies données biométriques particulières de la signature biométrique obscurcie.

Les fausses données biométriques particulières peuvent être élaborées de manière cohérentes avec les vraies données biométriques particulières. Pour cela, au moins une fausse donnée biométrique particulière peut être élaborée en transformant légèrement une vraie donnée biométrique ;
- dans le cas de minutiae qui correspondent à des données d'empreintes digitales d'un premier doigt, au moins une fausse minutiae peut être élaborée à partir de minutiae d'un second doigt ;
- une fausse donnée biométrique particulière peut aussi être élaborée en détectant une vraie donnée biométrique ayant une géométrie relativement proche d'une vraie donnée biométrique particulière et en transformant cette vraie donnée biométrique pour créer la fausse donnée biométrique particulière.

Le code d'authentification peut être établi selon les étapes suivante :
- les données biométriques particulières de la signature biométrique obscurcie sont ordonnées ;
- le code d'authentification est composé d'une suite de bits, de longueur égale au nombre total de vraies et de fausses données biométriques particulières de la signature biométrique obscurcie, chaque bit indiquant respectivement si la donnée biométrique particulière correspondante est vraie ou fausse.

La signature biométrique obscurcie et le code d'authentification peuvent être enregistrés sur une mémoire sécurisée d'un objet personnel de type carte à puce.

La solution propose aussi un procédé de vérification d'identité biométrique comprenant la capture de données biométriques, l'extraction d'une vraie signature biométrique composée de vraies données biométriques particulières, et comprenant les étapes suivante :
- comparaison de la vraie signature biométrique avec une signature biométrique obscurcie,
- élaboration d'un code indiquant les vraies et les fausses données biométriques sur la base de la comparaison précédente avec la vraie signature biométrique,
- comparaison de ce code avec un code d'authentification indiquant les vraies et les fausses données biométriques particulières de la signature biométrique obscurcie.

Dans ce procédé, le code d'authentification peut être stocké dans une mémoire sécurisée d'un objet personnel et la comparaison du code et du code d'authentification peut avoir lieu au sein de l'objet personnel.

Le procédé de vérification d'identité biométrique pour accéder à un service par l'intermédiaire d'un terminal de service, basé sur un objet personnel de type carte à puce pour stocker le code d'authentification et la signature biométrique obscurcie peut comprendre les étapes suivante :
- transfert de la signature biométrique obscurcie de l'objet personnel vers le terminal de service pour la comparaison de la vraie signature biométrique avec la signature biométrique obscurcie et élaboration du code au sein du terminal de service ;
- transfert du code depuis le terminal de service vers l'objet personnel pour comparaison du code avec le code d'authentification sur l'objet personnel.

L'invention repose aussi sur un dispositif d'enrôlement mettant en oeuvre un logiciel d'extraction de signature biométrique afin d'obtenir une vraie signature biométrique composée de vraies données biométriques particulières à partir de données biométriques capturées, mettant en oeuvre un logiciel d'obscurcissement consistant d'une part à élaborer des fausses données biométriques particulières et à les combiner avec les vraies données biométriques particulières afin d'obtenir une signature biométrique obscurcie, et d'autre part à élaborer un code d'authentification permettant d'indiquer les vraies et les fausses données biométriques particulières de la signature biométrique obscurcie.

Le dispositif d'enrôlement peut comprendre un dispositif de communication avec un objet personnel de type carte à puce apte au transfert de la signature biométrique obscurcie et du code d'authentification sur l'objet personnel.

L'invention propose aussi un objet personnel comprenant une mémoire sécurisée et un moyen de communication et comportant dans sa mémoire sécurisée une signature biométrique obscurcie comprenant des fausses données biométriques combinées à des vraies données biométriques, un code d'authentification pour indiquer quelles sont les fausses et les vraies données biométriques, et comprenant un moyen de comparaison d'un code transféré par le moyen de communication avec le code d'authentification. Cet objet personnel peut être un support à puce de type carte à puce.

L'invention propose aussi un terminal de service mettant en oeuvre un logiciel d'extraction afin d'obtenir une vraie signature biométrique composée de vraies données biométriques particulières à partir de données biométriques capturées et mettant en oeuvre un logiciel d'élaboration d'un code à partir d'une comparaison entre la vraie signature biométrique et une signature biométrique obscurcie, le code indiquant les vraies et les fausses données biométriques sur la base de la vraie signature biométrique calculée par le terminal de service.

Ce terminal de service peut comprendre un dispositif de communication pour communiquer avec un objet personnel de type carte à puce, apte au transfert depuis l'objet personnel de la signature biométrique obscurcie et vers l'objet personnel du code élaboré.

D'autres caractéristiques et avantages de la présente invention apparaîtront à la lecture de la description suivante d'exemples particuliers de réalisation, donnés à titre illustratifs et non limitatifs, et des dessins annexés dans lesquels :
- la figure 1 représente des exemples de minutiae d'empreintes digitales ;
- la figure 2 représente des exemples de création de fausses minutiae ;
- la figure 3 représente un exemple simplifié de création d'une signature obscurcie et du code d'authentification selon l'invention ;

Un mode de réalisation de l'invention va être décrit dans le cadre d'une identification par empreinte digitale dans une application bancaire.

Un utilisateur est muni d'une carte à puce possédant une mémoire sécurisée et une fonction de vérification d'identité biométrique qui sera détaillée par la suite.

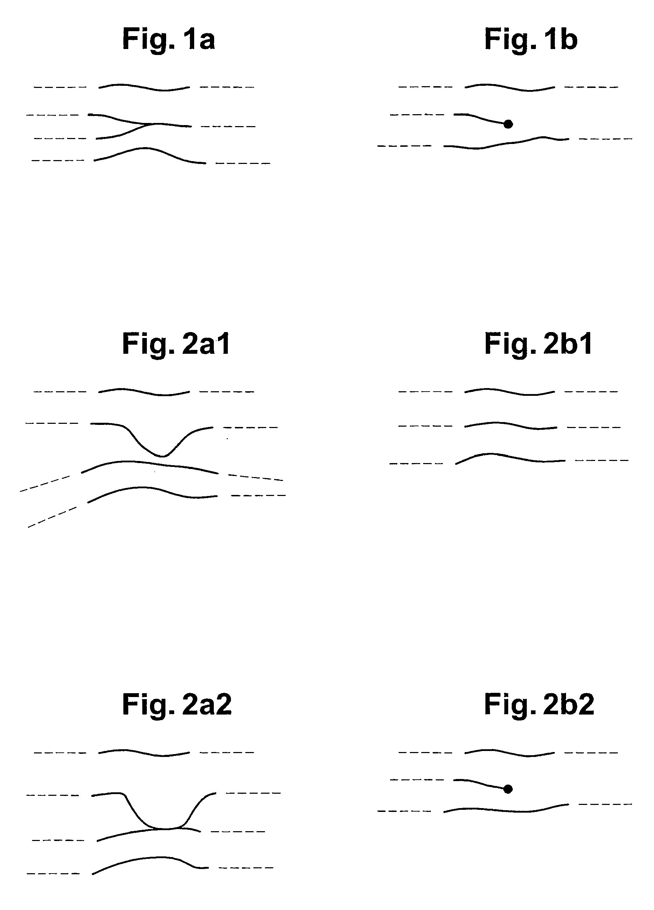

Lors de la phase d'enrôlement qui consiste à mémoriser la signature biométrique de référence sur la carte, l'utilisateur se présente dans un lieu sûr comme une agence bancaire par exemple, où son empreinte digitale est capturée sur un terminal particulier. Un algorithme d'extraction de l'art antérieur, dont le principe consiste à sélectionner des données biométriques particulières de l'empreinte digitale capturée, appelées minutiae, en déduit la signature biométrique composée de ces minutiae. Pour faciliter la compréhension de la suite de la description, nous appellerons vraies minutiae et vraie signature biométrique ces données obtenues selon le calcul de l'art antérieur. Ces vraies minutiae sont par exemple identifiées par deux données indiquant leur position, plus une donnée indiquant leur type. La figure 1 montre deux exemples de types de minutiae, une bifurcation de lignes (fig 1a) et une fin de ligne (fig 1b). Le nombre de minutiae à sélectionner par l'algorithme d'extraction est prédéfini afin d'obtenir un bon compromis entre la sécurité et la lourdeur du calcul. Selon le procédé de l'invention, avant l'enregistrement de la signature sur la carte à puce, le terminal d'enrôlement met en oeuvre un logiciel d'obscurcissement afin de transformer la vraie signature biométrique précédente. Ce logiciel d'obscurcissement met en oeuvre un procédé d'obscurcissement qui consiste à réunir les vraies minutiae extraites précédemment et composant la vraie signature biométrique avec des fausses données qu'on appellera fausses minutiae, de manière à obtenir une signature biométrique obscurcie.

Une caractéristique du procédé d'obscurcissement consiste à définir des fausses minutiae qui sont cohérentes avec les vraies minutiae, afin de rendre difficile ou impossible l'opération consistant à retrouver la vraie signature biométrique à partir de la signature obscurcie. Pour cela, on peut utiliser les procédés suivants :
- selon une première variante, le capteur du terminal bancaire saisit plus de minutiae que le nombre prédéfini. Les minutiae supplémentaires sont ensuite légèrement transformées afin d'obtenir des fausses minutiae. Cette transformation pourra consister en une modification des coordonnées de la minutiae par une rotation ou une translation, ou en une modification de leur type ;
- selon une seconde variante proche de la précédente, on peut obtenir les fausses minutiae en transformant des minutiae obtenues lors de la capture de l'empreinte d'un autre doigt. On s'arrangera ensuite pour ne conserver que des fausses minutiae pas trop proches des vraies minutiae sélectionnées afin de conserver une cohérence d'ensemble. L'avantage de cette variante est qu'elle est applicable dans les cas où le nombre de minutiae d'une seule empreinte est faible ;
- selon une troisième variante, on détecte parmi les données biométrique capturées des géométries relativement proches de vraies minutiae et on lets transforme afin de créer des fausses minutiae cohérentes avec la géométrie globale de l'empreinte digitale. Cette transformation est illustrée sur la figure 2. La figure 2a1 représente une vraie géométrie qui est transformée en une fausse minutiae de type bifurcation représentée sur la figure 2a2. La figure 2b1 représente une vraie géométrie qui est transformée en une fausse minutiae de type fin de ligne représentée sur la figure 2b2.

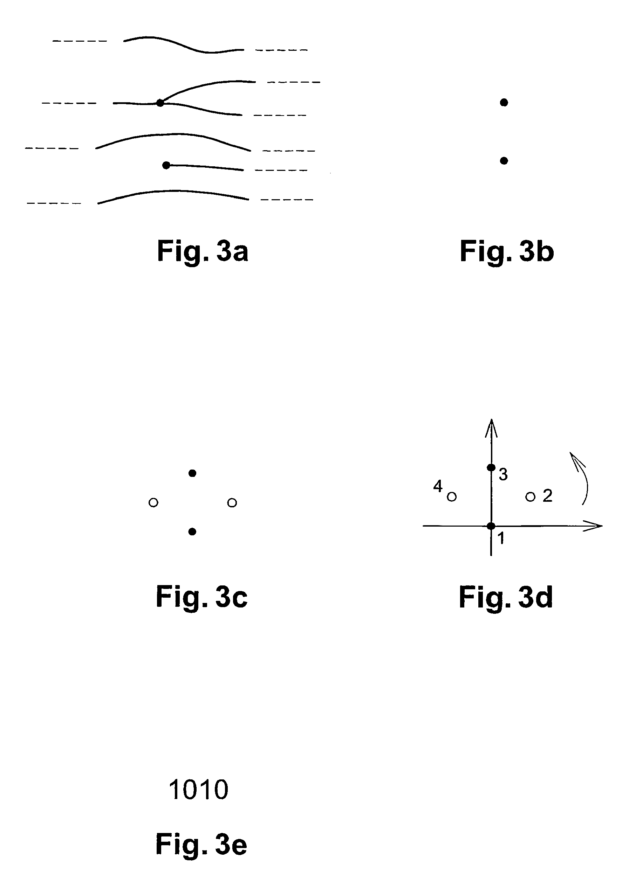

La réunion des fausses et des vraies minutiae permet d'obtenir la signature biométrique obscurcie. Dans le même temps, le procédé d'obscurcissement génère un code d'authentification dont le contenu indique les minutiae qui sont vraies et fausses dans la signature obscurcie. Pour élaborer ce code d'authentification, les minutiae sont d'abord ordonnées selon un ordre bien défini, en choisissant par exemple une origine géométrique puis en classant les minutiae en fonction de leur position par rapport à cette origine. Puis le code d'authentification est établi sous la forme d'une liste de 0 et de 1, les 0 indiquant qu'une minutiae est une fausse et les 1 que les minutiae sont vraies, ou inversement. Ce code d'authentification a donc pour dimension un nombre de bits égal au nombre total de minutiae de la signature obscurcie. La figure 3 illustre un exemple simplifié d'élaboration d'une signature obscurcie et du code d'authentification associé. La figure 3a représente une empreinte digitale, la figure 3b représente les deux vraies minutiae (représentées par un rond plein) extraites de l'empreinte digitale par l'algorithme d'extraction, la figure 3c représente la signature obscurcie, qui a été élaborée par l'ajout de deux fausses minutiae (représentées par un rond vide), la figure 3d représente les mêmes minutiae ordonnées et la figure 3e représente le code d'authentification associé.

La phase d'enrôlement se termine par la mémorisation sur la mémoire non volatile (E2PROM, FLASH...) de la carte à puce de la signature biométrique obscurcie et du code d'authentification. Ces données ont besoin d'un espace mémoire relativement faible de quelques dizaines d'octets.

Après l'enrôlement, la carte bancaire peut être utilisée pour réaliser des paiements, accéder aux services bancaires... Chaque opération exige une phase de vérification de l'identité de l'utilisateur, qui comprend les étapes suivantes :
- le terminal de service, par exemple un distributeur de monnaie, capture l'empreinte digitale de l'utilisateur ;
- le terminal calcule la vraie signature biométrique à partir de cette empreinte à l'aide du même algorithme d'extraction que celui utilisé lors de la phase d'enrôlement ;
- la carte transfère au terminal la signature biométrique obscurcie. On note que ce procédé présente l'avantage, contrairement à l'art antérieur, de ne pas transférer la vraie signature biométrique de référence ;
- le terminal compare la vraie signature biométrique avec la signature biométrique obscurcie transférée par la carte et en déduit un code représentant les différences entre les deux signatures, selon un calcul similaire à celui d'élaboration du code d'authentification décrit lors de la phase d'enrôlement. Ce code représente les vraies et les fausses minutiae sur la base de la vraie signature biométrique déduite de l'empreinte capturée. Ce code doit être quasiment identique au code d'authentification si l'utilisateur est bien la bonne personne ;
- le code obtenu est transféré du terminal vers la carte à puce ;
- la carte à puce comprend un moyen, sous forme de logiciel ou de matériel, qui permet de comparer (par exemple par une fonction XOR) le code reçu et le code d'authentification, stocké dans sa mémoire lors de la phase d'enrôlement. Si les codes sont suffisamment identiques par rapport à la tolérance prédéfinie, alors la carte renvoie au terminal un message positif de validation de l'identité de l'utilisateur.

Un premier avantage de ce procédé est sa souplesse : on peut choisir un nombre de vraies et de fausses minutiae en fonction des exigences de sécurité et de temps de traitement souhaités. Une mise en oeuvre des plus simples avec une utilisation de 10 vraies et 10 fausses minutiae, et avec une tolérance consistant à accepter l'erreur d'une minutiae dans le calcul de vérification, entraîne un taux de fausse acceptance de 1 pour 10000 et un temps de traitement par la carte du même ordre que la vérification d'un PIN code.

Ce procédé présente en outre les mêmes avantages des systèmes de l'art antérieur basés sur des PIN codes puisque d'une part il n'y a plus de transfert d'information confidentielle de la carte vers le terminal et puisque d'autre part, le calcul de vérification mis en oeuvre au sein de la carte est très simple. On remarque que le code d'authentification joue un rôle similaire au PIN code des solutions d'identification par PIN code telles que décrites précédemment. D'autre part, ce procédé comprend bien sûr les avantages de la biométrie. L'invention permet donc de cumuler les avantages de la biométrie et du PIN code.

L'invention, telle que décrite dans ce mode de réalisation, est mise en oeuvre à l'aide de différents dispositifs comprenant les fonctionnalités particulières suivante :
- un logiciel d'obscurcissement basé sur un procédé d'élaboration de fausses minutiae, de combinaison de fausses et vraies minutiae pour élaborer une signature biométrique obscurcie et un code d'authentification associé, mis en oeuvre lors d'une phase d'enrôlement sur un terminal sécurisé d'un fournisseur de service comme une banque ;
- un logiciel de comparaison d'une signature biométrique extraite avec une signature biométrique obscurcie, générant un code, mis en oeuvre sur un terminal de service lors d'une phase de vérification d'identité ;
- un moyen de vérification de code mis en oeuvre sur la carte qui possède en outre une mémoire sécurisée pour contenir un code d'authentification et une signature biométrique obscurcie de référence.

Les procédés de l'invention sont bien sûr adaptés aux autres domaines de la biométrie, à l'aide de mécanismes similaires basés sur des données biométriques particulières, jouant le rôle des minutiae de l'empreinte digitale. On ajoutera de même des fausses données biométriques particulières cohérentes avec les vraies données biométriques particulières.

De plus, l'invention est particulièrement bien adaptée aux systèmes basés sur des objets personnels tels que les cartes à puce, possédant peu de ressources matériel. Elle reste toutefois applicable à d'autres systèmes n'utilisant pas obligatoirement un tel objet.

## Revendications

1. Procédé d'enrôlement comprenant la capture de données biométriques, l'extraction d'une vraie signature biométrique composée de vraies données biométriques particulières, **caractérisé en ce qu'**il comprend les étapes suivante :
- élaboration de fausses données biométriques particulières ;
- génération d'une signature biométrique obscurcie en combinant les fausses données biométriques particulières avec les vraies données biométriques particulières,
- élaboration d'un code d'authentification qui indique quelles sont les fausses et les vraies données biométriques particulières de la signature biométrique obscurcie.

2. Procédé d'enrôlement selon la revendication 1 **caractérisé en ce que** les fausses données biométriques particulières sont élaborées de manière cohérentes avec les vraies données biométriques particulières.

3. Procédé d'enrôlement selon la revendication 2 **caractérisé en ce qu'**au moins une fausse donnée biométrique particulière est élaborée en transformant légèrement une vraie donnée biométrique.

4. Procédé d'enrôlement selon la revendication 3 **caractérisé en ce que** les vraies données biométriques particulières sont des minutiae qui correspondent à des données d'empreintes digitales d'un premier doigt et **en ce qu'**au moins une fausse minutiae est élaborée à partir de minutiae d'un second doigt.

5. Procédé d'enrôlement selon la revendication 3 **caractérisé en ce qu'**au moins une fausse donnée biométrique particulière est élaborée en détectant une vraie donnée biométrique ayant une géométrie relativement proche d'une vraie donnée biométrique particulière et en transformant cette vraie donnée biométrique pour créer la fausse donnée biométrique particulière.

6. Procédé d'enrôlement selon la revendication 1 **caractérisé en ce que** le code d'authentification est établi selon les étapes suivante :
- les données biométriques particulières de la signature biométrique obscurcie sont ordonnées ;
- le code d'authentification est composé d'une suite de bits, de longueur égale au nombre total de vraies et de fausses données biométriques particulières de la signature biométrique obscurcie, chaque bit indiquant respectivement si la donnée biométrique particulière correspondante est vraie ou fausse.

7. Procédé d'enrôlement selon la revendication 1 **caractérisé en ce que** les données biométriques sont celles d'une empreinte digitale et les données biométriques particulières des minutiae.

8. Procédé d'enrôlement selon l'une des revendications précédentes **caractérisé en ce que** la signature biométrique obscurcie et le code d'authentification sont enregistrés sur une mémoire sécurisée d'un objet personnel de type carte à puce.

9. Procédé de vérification d'identité biométrique comprenant la capture de données biométriques, l'extraction d'une vraie signature biométrique composée de vraies données biométriques particulières, **caractérisé en ce qu'**il comprend les étapes suivante :
- comparaison de la vraie signature biométrique avec une signature biométrique obscurcie,
- élaboration d'un code indiquant les vraies et les fausses données biométriques sur la base de la comparaison précédente avec la vraie signature biométrique,
- comparaison de ce code avec un code -d'authentification indiquant les vraies et les fausses données biométriques particulières de la signature biométrique obscurcie.

10. Procédé de vérification d'identité biométrique selon la revendication précédente **caractérisé en ce que** le code d'authentification est stocké dans une mémoire sécurisée d'un objet personnel et **en ce que** la comparaison du code et du code d'authentification a lieu au sein de l'objet personnel.

11. Procédé de vérification d'identité biométrique selon la revendication précédente pour accéder à un service par l'intermédiaire d'un terminal de service, basé sur un objet personnel de type carte à puce pour stocker le code d'authentification et la signature biométrique obscurcie et comprenant les étapes suivante :
- transfert de la signature biométrique obscurcie de l'objet personnel vers le terminal de service pour la comparaison de la vraie signature biométrique avec la signature biométrique obscurcie et élaboration du code au sein du terminal de service ;
- transfert du code depuis le terminal de service vers l'objet personnel pour comparaison du code avec le code d'authentification sur l'objet personnel.

12. Dispositif d'enrôlement mettant en oeuvre un logiciel d'extraction de signature biométrique afin d'obtenir une vraie signature biométrique composée de vraies données biométriques particulières à partir de données biométriques capturées **caractérisé en ce qu'**il met en oeuvre un logiciel d'obscurcissement consistant d'une part à élaborer des fausses données biométriques particulières et à les combiner avec les vraies données biométriques particulières afin d'obtenir une signature biométrique obscurcie,
et d'autre part à élaborer un code d'authentification permettant d'indiquer les vraies et les fausses données biométriques particulières de la signature biométrique obscurcie.

13. Dispositif d'enrôlement selon la revendication précédente **caractérisé en ce qu'**il comprend un dispositif de communication avec un objet personnel de type carte à puce apte au transfert de la signature biométrique obscurcie et du code d'authentification sur l'objet personnel.

14. Objet personnel comprenant une mémoire sécurisée et un moyen de communication **caractérisé en ce qu'**il comporte dans sa mémoire sécurisée :
- une signature biométrique obscurcie comprenant des fausses données biométriques combinées à des vraies données biométriques,
- un code d'authentification pour indiquer quelles sont les fausses et les vraies données biométriques,
et **en ce qu'**il comprend un moyen de comparaison d'un code transféré par le moyen de communication avec le code d'authentification.

15. Objet personnel selon la revendication précédente **caractérisé en ce qu'**il est un support à puce de type carte à puce.

16. Terminal de service mettant en oeuvre un logiciel d'extraction afin d'obtenir une vraie signature biométrique composée de vraies données biométriques particulières à partir de données biométriques capturées **caractérisé en ce qu'**il met en oeuvre un logiciel d'élaboration d'un code à partir d'une comparaison entre la vraie signature biométrique et une signature biométrique obscurcie, le code indiquant les vraies et les fausses données biométriques sur la base de la vraie signature biométrique calculée par le terminal de service.

17. Terminal de service selon la revendication précédente **caractérisé en ce qu'**il comprend un dispositif de communication pour communiquer avec un objet personnel de type carte à puce, apte au transfert depuis l'objet personnel de la signature biométrique obscurcie et vers l'objet personnel du code élaboré.

## Claims

1. An enrolment method including the capture of biometric data, the retrieval of a true biometric signature composed of particular true biometric data, **characterized in that** it includes the following steps:
- working out particular false biometric data;
- generating a hidden biometric signature by combining the particular false biometric data with the particular true biometric data,
- working out an authentication code which indicates which are the particular true and false biometric data of the hidden biometric signature.

2. An enrolment method according to claim 1, **characterized in that** the particular false biometric data are worked out consistently with the particular true biometric data.

3. An enrolment method according to claim 2, **characterized in that** at least one particular false biometric datum is worked out by slightly transforming a true biometric datum.

4. An enrolment method according to claim 3, **characterized in** the particular true biometric data are minutiae which match fingerprint data of a first finger and **in that** at least a false minutiae is worked out from a second finger.

5. An enrolment method according to claim 3, **characterized in that** at least one particular false biometric datum is worked out by detecting a true biometric datum having a geometry relatively close to a particular true biometric datum and by transforming such a true biometric datum for creating the particular false biometric datum.

6. An enrolment method according to claim 1, **characterized in that** the authentication code is worked out according to the following steps:
- the particular biometric data of the hidden biometric signature are ordered;
- the authentication code is composed of a sequence of bits, having a length equal to the total number of particular true and false biometric data of the hidden biometric signature, with each bit respectively indicating whether the matching particular biometric datum is true or false.

7. An enrolment method according to claim 1, **characterized in that** the biometric data are those of a fingerprint and the particular biometric data of the minutiae.

8. An enrolment method according to one of the preceding claims, **characterized in that** the hidden biometric signature and the authentication code are saved on a secure memory of a personal object of the chip card type.

9. A method for checking the biometric identity including the capture of biometric data, the retrieval of a true biometric signature composed of particular true biometric data, **characterized in that** it includes the following steps:
- comparing the true biometric signature with a hidden biometric signature,
- working out a code indicating the true and the false biometric data basing itself on the previous comparison with the true biometric signature,
- comparing such code with an authentication code indicating the particular true and false biometric data of the hidden biometric signature.

10. A method for checking the biometric identity according to the preceding claim **characterized in that** the authentication code is stored in a secure memory of a personal object and **in that** the comparison of the code with the authentication code occurs within the personal object.

11. A method for checking the biometric identity according to the preceding claim for accessing a service through a service terminal, based on a personal object of the chip card type for storing the authentication code and the hidden biometric signature and including the following steps:
- transferring the hidden biometric signature from the personal object to the service terminal for comparing the true biometric signature with the hidden biometric signature and working out the code within the service terminal;
- transferring the code from the service terminal to the personal object for comparing the code with the authentication code to the personal object.

12. An enrolment device implementing a biometric signature retrieval software so as to obtain a true biometric signature composed of particular true biometric data from captured biometric data, **characterized in that** it implements a hiding software consisting, on the one hand, in working out particular false biometric data and in combining these with the particular true biometric data so as to obtain a hidden biometric signature,
and, on the other hand, in working out an authentication code for indicating the particular true and false biometric data of the hidden biometric signature.

13. An enrolment device according to the preceding claim, **characterized in that** it includes a device for communicating with a personal object of the chip card type able to transfer the hidden biometric signature and the authentication code to the personal object.

14. A personal object including a secure memory and communication means **characterized in that** it includes, in the secure memory:
- a hidden biometric signature including false biometric data combined with true biometric data,
- an authentication code for indicating which are the false and the true biometric data,
and **in that** it includes means for comparing a code transferred by the communication means with the authentication code.

15. A personal object according to the preceding claim, **characterized in that** it is a chip support of the chip card type.

16. A service terminal implementing a retrieval software so as to obtain a true biometric signature composed of particular true biometric data from captured biometric data, **characterized in that** it implements a software for working out a code from a comparison between the true biometric signature and a hidden biometric signature, with the code indicating the true and the false biometric data basing itself on the true biometric signature calculated by the service terminal.

17. A service terminal according to the preceding claim, **characterized in that** it includes a communication device for communicating with a personal object of the chip card type, able to transfer from the personal device the hidden biometric signature and to the personal device the worked out code.

## Patentansprüche

1. Einlernverfahren mit der Erfassung biometrischer Merkmalsdaten, Extraktion einer echten biometrischen Signatur bestehend aus echten individuellen biometrischen Daten, **dadurch gekennzeichnet, daß** es folgende Schritte umfaßt:
- Erarbeitung von falschen individuellen biometrischen Daten;
- Generierung einer verdunkelten biometrischen Signatur durch Kombination der falschen individuellen biometrischen Daten mit den echten individuellen biometrischen Daten;
- Erarbeitung eines Erkennungscodes, der angibt, welche die falschen und die richtigen individuellen biometrischen Daten der verdunkelten biometrischen Signatur sind.

2. Einlernverfahren nach Anspruch 1, **dadurch gekennzeichnet, daß** die falschen individuellen biometrischen Daten kohärent mit den echten individuellen biometrischen Daten erarbeitet werden.

3. Einlernverfahren nach Anspruch 2, **dadurch gekennzeichnet, daß** mindestens ein falscher individueller biometrischer Datensatz durch leichte Umwandlung eines echten individuellen biometrischen Datensatzes erarbeitet wird.

4. Einlernverfahren nach Anspruch 3, **dadurch gekennzeichnet, daß** die echten individuellen biometrischen Daten Charakteristika sind, die Daten von Fingerabdrücken eines ersten Fingers entsprechen, und **dadurch**, daß ausgehend von den Charakteristika eines zweiten Fingers mindestens ein falsches Charakteristikum erarbeitet wird.

5. Einlernverfahren nach Anspruch 3, **dadurch gekennzeichnet, daß** mindestens ein falscher individueller biometrischer Datensatz durch Entdeckung eines echten individuellen biometrischen Datensatzes erarbeitet wird, der eine Geometrie hat, die ziemlich nahe an derjenigen eines echten individuellen biometrischen Datensatzes liegt, und indem dieser echte individuelle biometrische Datensatz umgewandelt wird, um den falschen individuellen biometrischen Datensatz anzulegen.

6. Einlernverfahren nach Anspruch 1, **dadurch gekennzeichnet, daß** der Erkennungscode mit folgenden Schritten erstellt wird:
- Die individuellen biometrischen Daten der verdunkelten biometrischen Signatur werden geordnet;
- Der Erkennungscode besteht aus einer Folge von Bits gleicher Länge wie die Gesamtanzahl echter und falscher individueller biometrischer Daten der verdunkelten biometrischen Signatur, wobei jedes Bit angibt, ob der entsprechende individuelle biometrische Datensatz echt beziehungsweise falsch ist.

7. Einlernverfahren nach Anspruch 1, **dadurch gekennzeichnet, daß** die biometrischen Daten diejenigen eines Fingerabdrucks und die individuellen biometrischen Daten Charakteristika sind.

8. Einlernverfahren nach einem beliebigen der vorstehenden Ansprüche, **dadurch gekennzeichnet, daß** die verdunkelte biometrische Signatur und der Erkennungscode in einem gesicherten Speicher eines persönlichen Gegenstands von der Art einer Chipkarte abgelegt werden.

9. Biometrisches Erkennungsverfahren mit der Erfassung biometrischer Merkmalsdaten, Extraktion einer echten biometrischen Signatur bestehend aus echten individuellen biometrischen Daten, **dadurch gekennzeichnet, daß** es folgende Schritte umfaßt:
- Vergleich der echten biometrischen Signatur mit einer verdunkelten biometrischen Signatur;
- Erarbeitung eines Codes, der auf der Grundlage des vorherigen Vergleichs mit der echten biometrischen Signatur die echten und die falschen biometrischen Daten angibt;
- Vergleich dieses Codes mit einem Erkennungscode, der die echten und die falschen individuellen biometrischen Daten der verdunkelten biometrischen Signatur angibt;

10. Biometrisches Erkennungsverfahren nach vorstehendem Anspruch, **dadurch gekennzeichnet, daß** der Erkennungscode in einem gesicherten Speicher eines persönlichen Gegenstands aufbewahrt wird, und **dadurch**, daß der Vergleich des Codes und des Erkennungscodes im persönlichen Gegenstand stattfindet.

11. Biometrisches Erkennungsverfahren nach vorstehendem Anspruch für den Zugriff auf einen Service vermittels eines Serviceterminals auf Grundlage eines persönlichen Gegenstands von der Art einer Chipkarte, um den Erkennungscode und die verdunkelte biometrische Signatur abzulegen, und das die folgenden Schritte umfaßt:
- Transfer der verdunkelten biometrischen Signatur des persönlichen Gegenstands zum Serviceterminal für den Vergleich der echten biometrischen Signatur mit der verdunkelten biometrischen Signatur und Erarbeitung des Codes im Serviceterminal;
- Transfer des Codes vom Serviceterminal zum persönlichen Gegenstand für den Vergleich des Codes mit dem Erkennungscode auf dem persönlichen Gegenstand;

12. Einlernvorrichtung mit Einsatz einer Software für die Extraktion einer biometrischen Signatur, um eine echte biometrische Signatur zu erhalten, die aus echten individuellen biometrischen Daten aus erfaßten biometrischen Daten besteht, **dadurch gekennzeichnet, daß** sie eine Software für die Verdunkelung einsetzt, was einerseits daraus besteht, falsche individuelle biometrische Daten zu erarbeiten und sie mit den echten individuellen biometrischen Daten zu kombinieren, um eine verdunkelte biometrische Signatur zu erhalten, und andererseits daraus, einen Erkennungscode zu erarbeiten, mit dem die echten und die falschen individuellen biometrischen Daten der verdunkelten biometrischen Signatur angegeben werden können.

13. Einlernvorrichtung nach vorstehendem Anspruch, **dadurch gekennzeichnet, daß** sie eine Vorrichtung für die Kommunikation mit einem persönlichen Gegenstand von der Art einer Chipkarte umfaßt, die für den Transfer der verdunkelten biometrischen Signatur und des Erkennungscodes auf den persönlichen Gegenstand geeignet ist.

14. Persönlicher Gegenstand mit einem gesicherten Speicher und einem Kommunikationsmittel, **dadurch gekennzeichnet, daß** er in seinem gesicherten Speicher enthält:
- eine verdunkelte biometrische Signatur mit falschen biometrischen Daten, die mit echten biometrischen Daten kombiniert sind,
- einen Erkennungscode für die Angabe, welche die falschen und die echten biometrischen Daten sind,
und **dadurch**, daß er ein Mittel für den Vergleich eines vom Kommunikationsmittel transferierten Codes mit dem Erkennungscode umfaßt.

15. Persönlicher Gegenstand nach vorstehendem Anspruch, **dadurch gekennzeichnet, daß** er ein Träger mit Chip von der Art Chipkarte ist.

16. Serviceterminal mit Einsatz einer Software für die Extraktion, um eine echte biometrische Signatur zu erhalten, die aus echten individuellen biometrischen Daten aus erfaßten biometrischen Daten besteht, **dadurch gekennzeichnet, daß** es eine Software für die Erarbeitung eines Codes ausgehend von einem Vergleich der echten biometrischen Signatur mit einer verdunkelten biometrischen Signatur einsetzt, wobei der Code die echten und die falschen biometrischen Daten auf der Grundlage der echten biometrischen Signatur angibt, die vom Serviceterminal berechnet wird.

17. Serviceterminal nach vorstehendem Anspruch, **dadurch gekennzeichnet, daß** es eine Vorrichtung für die Kommunikation umfaßt, die mit einem persönlichen Gegenstand von der Art einer Chipkarte kommuniziert, und die für den Transfer der verdunkelten biometrischen Signatur ab dem persönlichen Gegenstand und des erarbeiteten Codes zum persönlichen Gegenstand geeignet ist.
